# FASCICULE DE BREVET EUROPEEN

(11) **EP 0 531 213 B1**
(45) Date de publication et mention de la délivrance du brevet: **11.12.1996**
(21) Numéro de dépôt: 92402407.8
(22) Date de dépôt: 03.09.1992
(51) Int. Cl.: B01D 11/04

(54) **Mélangeur-décanteur modulable, du type à étages séparés et à agitation mécanique**
Modularer Mischer-Dekantierapparat, mit verschiedenen Stufen und mechanischem Rührer
Modular mixer-settler device with separate stages and mechanical stirring

(30) Priorité: 05.09.1991 FR 9110983
(43) Date de publication de la demande: 10.03.1993
(73) Titulaire: COGEMA (COMPAGNIE GENERALE DES MATIERES NUCLEAIRES), F-78141 Velizy-Villacoublay Cédex (FR)
(72) Inventeur: Chomel, Rodolph, F-84850 Camaret/Aygues (FR)
(74) Mandataire: Dubois-Chabert, Guy

(56) Documents cités:
- EP-A- 0 355 159
- DE-A- 1 519 833
- DE-A- 2 000 991
- DE-A- 2 039 211
- DE-B- 1 156 383

## Description

### DOMAINE DE L'INVENTION

La présente invention concerne les mélangeurs-décanteurs destinés à assurer le traitement d'un liquide par un autre avec ou sans corps solides en suspension. L'invention concerne en particulier des mélangeurs-décanteurs de laboratoire qui doivent être télémanipulables, c'est-à-dire devant être manipulés à distance par l'intermédiaire d'un télémanipulateur. Ceci est le cas lorsque des solutions à très haute activité doivent être traitées à l'intérieur d'une enceinte blindée.

### ART ANTERIEUR ET PROBLEME POSE

Les mélangeurs-décanteurs de laboratoire et du type à étages séparés et à agitation mécanique, réalisés principalement en acier inoxydable, constituent des appareils lourds, encombrants. Leur utilisation et leur manipulation nécessitent généralement l'intervention directe de l'opérateur et souvent l'aide de dispositifs mécaniques de manutention et de levage impossible à utiliser au seul moyen d'un télémanipulateur.

Le but de l'invention est donc de remédier à ces inconvénients.

D'autre part, le document DE-A-1 156 383 décrit un dispositif pour l'extraction en continu de fluides. L'appareil comprend plusieurs étages de décantation juxtaposés, chacun muni d'éléments moteurs. Des conduites sont prévues pour relier les phases lourdes et légères les unes aux autres d'un étage à l'autre. On peut noter la présence de hublots sur la face avant de chacun des étages pour pouvoir voir le niveau de l'interface entre les deux phases.

### RESUME DE L'INVENTION

A cet effet, l'objet principal de l'invention est un mélangeur-décanteur du type à étages séparés et à agitation mécanique comportant pour chaque étage :
- une chambre de mélange à l'intérieur de laquelle tourne :
- une turbine entraînée en rotation par :
- des moyens moteurs ;
- une chambre de décantation en communication avec la chambre de mélange ;
- des canalisations de circulation des phases légère ou lourde reliés avec les canalisations des étages voisins ;
- au moins une entrée et une sortie des phases légère et lourde ;
- une clé de réglage du niveau d'interphase ; et
- des clés de communication des entrées et des sorties des phases légère et lourde.

Selon l'invention, le mélangeur-décanteur a une structure en modules séparables, chaque module comportant au moins un étage et des moyens de liaison étanche avec au moins un autre module, de manière à ce que chaque module puisse être manipulé par un télémanipulateur, de manière à permettre l'utilisation et la manipulation à distance du mélangeur-décanteur lorsqu'il est isolé dans une enceinte étanche et inaccessible à un opérateur.

Dans la réalisation principale de l'invention, les entrées et sorties se trouvent sur une même face avant de leur module.

De plus, il comprend de préférence sur chaque face latérale d'un module deux orifices latéraux de communication des phases lourde et légère, pouvant être reliées avec les orifices latéraux correspondants d'un module adjacent.

De préférence, les clés se trouvent sur l'avant d'une surface supérieure de leur module. Ainsi, les différents moyens de commande du mélangeur-décanteur se trouvent rassemblés sur l'avant du dispositif.

D'après une caractéristique de l'invention, chaque étage possède un hublot télédémontable placé sur la face avant en regard de la chambre de décantation pour permettre la visualisation de l'interphase entre la phase légère et la phase lourde.

Dans la réalisation préférentielle du mélangeur-décanteur selon l'invention, chaque module possède trois étages.

De préférence, les moyens moteurs pour un module sont constitués de :
- un moteur placé sur la surface supérieure entraînant :
- une boîte à engrenage ayant une sortie par étage pour entraîner la turbine de chaque chambre de mélange. La position en hauteur de la turbine et la vitesse de rotation du moteur étant réglables.

De préférence, les moyens de liaison étanche comprennent :
- une plaque d'étanchéité placée entre deux modules au niveau des orifices latéraux ;
- un système de serrage à cabestan pour serrer deux modules adjacents.

### LISTE DES FIGURES

L'invention et ses différentes caractéristiques seront mieux comprises à la lecture de la description suivante, accompagnée des figures représentant respectivement :
- figure 1, une vue de dessus d'une partie d'un mélangeur-décanteur selon l'invention et mettant en valeur le caractère démontable de différents modules du mélangeur-décanteur ;
- figure 2, en coupe, un étage d'un mélangeur-décanteur selon l'invention ;
- figure 3, en vue de face, un module d'un mélangeur-décanteur selon l'invention ;
- figure 4, un schéma de circulation montrant une partie des différentes canalisations dans un module du mélangeur-décanteur selon l'invention ; et
- figures 5A et 5B, deux schémas illustrant la possibilité de stockage du mélangeur-décanteur selon l'invention dans un conteneur normalisé.

### DESCRIPTION DETAILLEE D'UNE REALISATION DE L'INVENTION

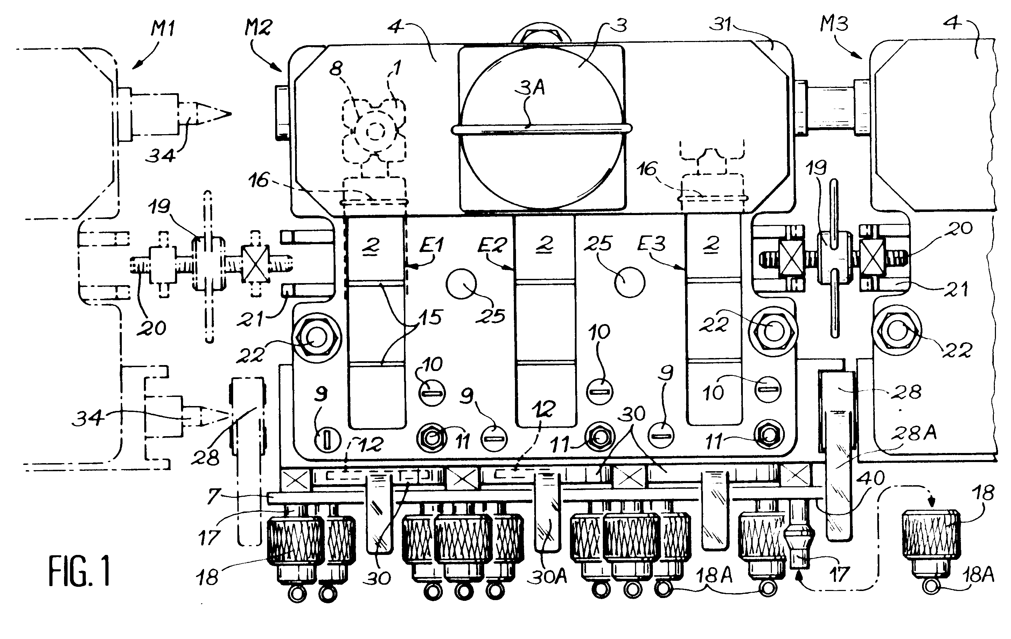

En référence à la figure 1, le mélangeur-décanteur selon l'invention comprend au moins un, mais de préférence plusieurs modules M₁, M₂ et M₃, trois dans le cas de cette première figure. Le module de gauche M₁ a été représenté détaché de son module voisin M₂, qui lui, a été représenté attaché à son autre module voisin M₃.

Les modules représentés dans la réalisation décrite comportent chacun trois étages E₁, E₂ et E₃. Ceci n'est bien sûr qu'un exemple de réalisation, le nombre d'étages pouvant varier suivant les besoins de l'utilisation.

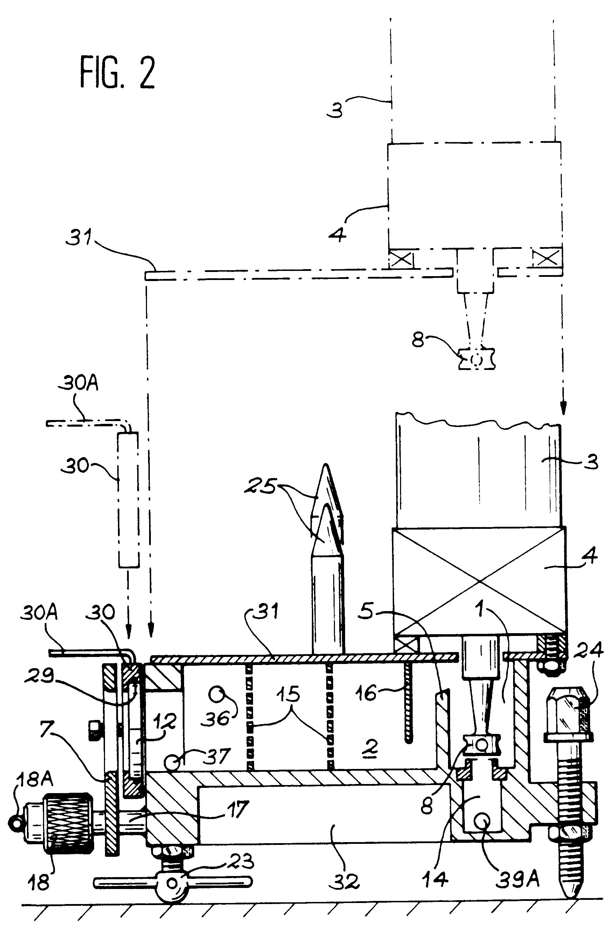

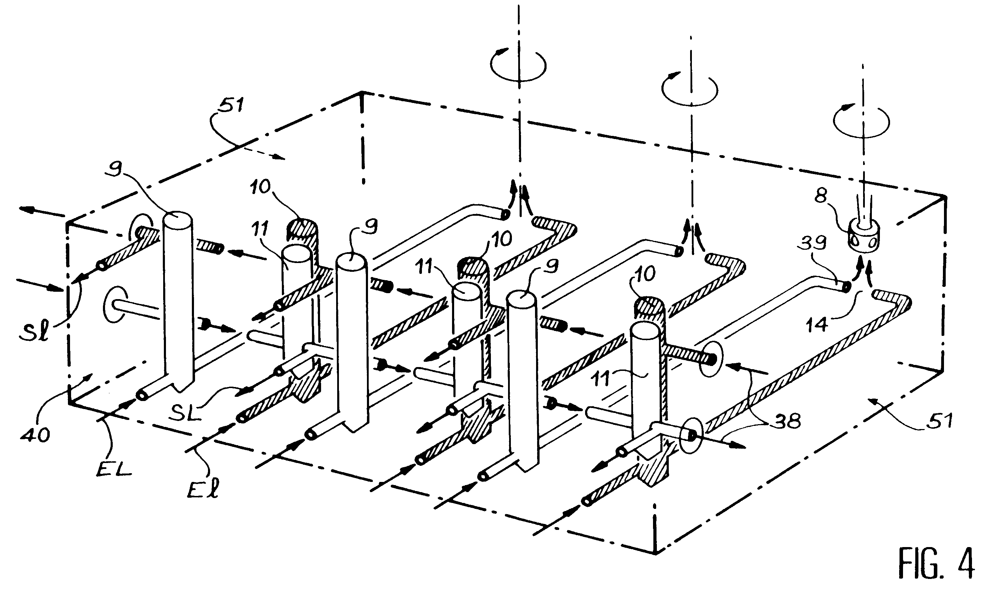

Chaque étage comprend une chambre d'admission, non représentée sur cette première vue, une chambre de mélange 1, associée à une chambre de décantation 2 à laquelle elle est reliée par l'intermédiaire d'une plaque de distribution 16. Le profil de cette jonction est bien visible sur la figure 2. Chaque étage est alimenté en phase légère et en phase lourde. En d'autres termes, chaque étage d'un module est relié à l'étage adjacent par des canalisations de phase légère et de phase lourde. Le circuit hydraulique d'un module est mieux représenté par le schéma de la figure 4, et on peut noter que chaque chambre de décantation 2 est reliée, en haut à la canalisation de phase légère et en bas à la canalisation de phase lourde.

Sur cette figure 1, on peut distinguer, pour chaque étage, une clé de circulation de phase lourde 9, une clé de circulation de phase légère 10 placées et une clé de réglage du niveau d'interphase 11 à côté de la chambre de décantation 2. L'usage des deux clés 9 de circulation et 10 permet de canaliser les phases lourde et légère, soit vers l'extérieur, soit vers un étage adjacent. Les liaisons vers l'extérieur sont réalisées à l'aide d'embouts mâles, par exemple des embouts RAFIX du type VG-NB, obturables par un bouchon télémanipulable 18 correspondant à l'embout 17. La clé de réglage du niveau d'interphase 11 permet de positionner l'interphase dans le décanteur.

On peut encore noter sur cette figure 1, la présence d'un moteur 3 destiné à entraîner trois turbines se trouvant chacune dans une chambre de mélange 1, ce moteur étant placé sur une plaque supérieure 31 surmontant le carter du module. Il est muni d'une poignée de manutention 3A.

Selon l'invention, le mélangeur-décanteur revêt un caractère modulable, représenté sur la figure 1 par le fait que le premier module M₁ se trouve détaché du deuxième module M₂, alors que ce dernier est fixé au troisième M₃. On dispose donc de moyens de liaison étanche entre au moins deux modules, trois dans le cas de la figure 1.

Comme représenté sur cette dernière, ces moyens de liaison étanche sont constitués de plaques d'étanchéité 28 munies d'une poignée 28A. Le serrage de deux modules se fait au moyen d'un système de serrage du type à cabestan. Comme on peut le voir, la roue de cabestan 19 permet, lorsqu'elle est tournée autour de son axe de rotation qui est dans la direction de serrage, de rapprocher deux modules. En effet, elle a son axe 20 vissé à chaque extrémité dans une pièce d'ancrage 21 solidaire d'un module. Des guides de positionnement 34 permettent, lors du rapprochement de deux modules, de les positionner l'un par rapport à l'autre. En effet, sur leurs parties latérales, chaque module possède des orifices latéraux de communication, à la fois pour la phase lourde et la phase légère. Ces orifices doivent être positionnés en correspondance. Ils ne sont pas représentés sur cette figure.

La description d'un module se poursuit en référence à la figure 2 qui est une coupe d'un étage d'un module. On retrouve sur cette figure, la chambre de mélange 1, la chambre de décantation 2, un embout de sortie 17 surmontée de son bouchon 18 avec un anneau de préhension 18A et la plaque supérieure 31 surmontée du moteur 3. Ces deux derniers éléments ont été représentés à la fois dans une position supérieure de démontage et dans une position inférieure d'utilisation.

Par l'intermédiaire d'une boîte d'engrenage 4, le moteur 3 entraîne une turbine ou un agitateur 8 qui agit à l'intérieur de la chambre de mélange 1. En dessous de cette turbine 8, se trouve la chambre d'admission 14 au niveau de laquelle arrive à la fois la phase légère et la phase lourde par un orifice 39A perpendiculaire au plan de cette figure 2.

Le mélange obtenu dans cette chambre de mélange 1 passe dans la chambre de décantation 2 après avoir passé dans un déversoir 5, une plaque de distribution 16 suivie de plusieurs plaques de coalescence 15. De l'autre côté de la chambre de décantation 2, on peut voir déboucher, dans la partie supérieure une canalisation d'évacuation de la phase légère 36, et dans la partie inférieure une canalisation d'évacuation de la phase lourde 37. Chacune de ces canalisations est reliée à la fois à une sortie, symbolisée par un embout 17 et un bouchon 18 et à une autre canalisation de circulation de l'étage voisin.

On distingue également sur cette figure 2, un pied arrière réglable 24, par lequel on peut effectuer un réglage lors de l'installation d'un module. De l'autre côté de ce dernier, se trouve une roue de réglage avant 23, destinée à régler l'horizontalité du module. Dans le but de régler la position en hauteur de l'interphase à partir de la clé de réglage 11, on place un hublot télédémontable 12 sur le devant de cette chambre de décantation 2. Celui-ci peut être installé à l'aide d'une bride de fixation 30 complétée d'au moins un joint d'étanchéité 29. Le serrage de l'ensemble peut s'effectuer avec une plaque avant de serrage 7 placée verticalement sur la face avant 40, c'est-à-dire la face gauche du module.

On note que la bride 30 de fixation du hublot 12 est équipée d'une poignée 30A, facilitant ainsi la manipulation de cette bride 30 et le montage et le démontage du hublot 12. Ces opérations peuvent ainsi être effectuées relativement facilement par un télémanipulateur. On peut noter à ce sujet, que cette poignée 30A, les embouts 17 et leur bouchon 18 des canalisations de phase lourde et légère se trouvent tous sur la face avant du module. Ainsi, l'utilisation et les différents réglages d'un tel mélangeur-décanteur constitué d'une batterie de plusieurs modules est possible par un télémanipulateur se trouvant du côté avant du mélangeur-décanteur. De même, le réglage en hauteur de la partie avant à l'aide de la roue 23 est possible au moyen de ce même télémanipulateur.

Lors du montage du bloc moteur, comprenant le moteur 3, le boîte d'engrenage et la plaque supérieure 31, on bénéficie de la présence de guides de positionnement vertical 25 qui dirigent la plaque supérieure 31 par rapport au carter du module. Un évidement de matière 32 est effectué pour diminuer le poids du module.

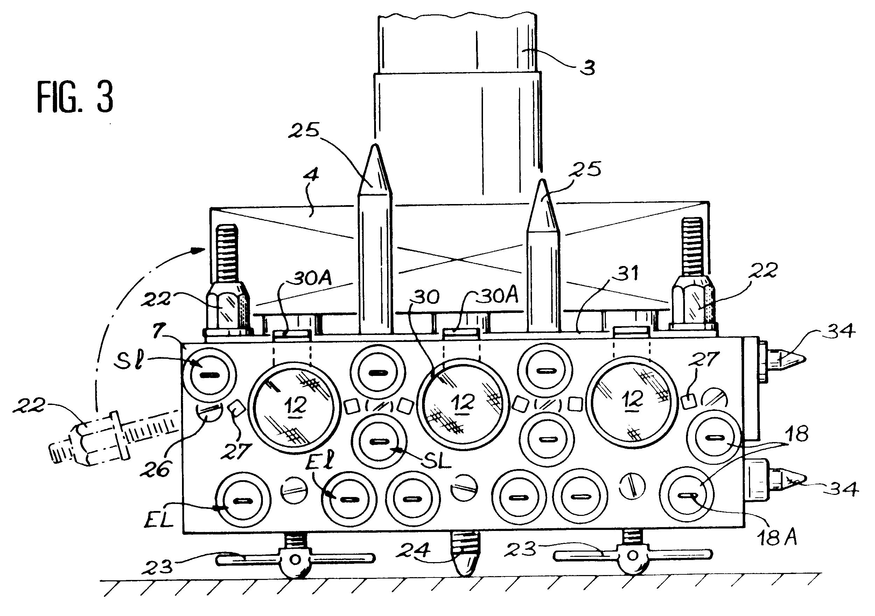

La figure 3 permet également de montrer les possibilités d'action d'un télémanipulateur sur un module. En effet, cette figure montre principalement la face avant 40 d'un module. On peut y distinguer les hublots 12 correspondant chacun à un étage du module. Autour du hublot 12, figurent différents accès aux phases lourdes et légères, ces accès sont symbolisés par les embouts 17 recouverts de leur bouchon 18. En considérant ainsi l'étage de gauche, on distingue dans la partie supérieure de la face avant 40, une sortie Sₗ de la phase légère. L'entrée de cette phase légère Eₗ se trouve par contre dans la partie inférieure de la face avant. Concernant la face lourde, la sortie S_{L} se trouve à mi-hauteur et l'entrée E_{L} se trouve en bas.

Le caractère facilement montable et démontable des hublots 12, en l'occurrence "télédémontables", est visualisé par la présence, pour chaque hublot 12, de deux vis de fixation frontales 27. Sur cette face avant 40, on distingue également des vis de fixation 26 de la plaque avant 7 de la fixation de hublots 12.

On y distingue également des boulons basculants 22 destinés à bloquer la plaque supérieure 31, et par conséquent, l'ensemble moteur sur le carter du module.

Enfin, on constate que, pour un module, il est possible d'utiliser un seul moteur 3 pour plusieurs étages. En effet, à l'aide d'une boîte à engrenage 4, et éventuellement un train de réduction de vitesse, il est possible d'entraîner la turbine de chaque étage placée sur un axe vertical parallèle, et décalé par rapport à l'axe du moteur en ce qui concerne les deux étages d'extrémité. La vitesse de rotation de la turbine est fonction de la tension d'alimentation du moteur. Elle peut varier de 0 à 1 750 tr/min. La position en hauteur de la turbine dans la chambre de mélange peut être modifiée.

La figure 4 représente schématiquement le circuit hydraulique d'un module avec les différentes canalisations entrées et sorties. Cette vue étant en perspective cavalière, la face avant 40 du module se trouve en bas à gauche.

De manière générale, la phase lourde est représentée par des canalisations claires et la phase légère est représentée par des canalisations hachurées.

Sur la face avant 40, pour chaque étage, on peut distinguer en haut à gauche la sortie Sₗ de la phase légère et en bas à droite l'entrée Eₗ de cette phase légère. De la même manière, on y distingue à mi-hauteur la sortie de la phase lourde Sₗ, l'entrée de cette phase lourde Eₗ étant placée en bas à gauche.

Comme le montrent les canalisations et les axes qui les représentent, les canalisations de phase légère de chaque étage sont reliées entre elles, ainsi que les canalisations de phase lourde. On note également que pour chaque étage, une canalisation de phase légère et une canalisation de phase lourde 39 arrivent au niveau de la chambre de mélange 14 placée en dessous de la turbine 8 de la chambre de mélange.

Sur les faces latérales 51, débouchent par des orifices latéraux 38 les phases lourde et légère. Les emplacements de ces orifices latéraux 38 sont mis en correspondance avec les orifices latéraux correspondants du module adjacent.

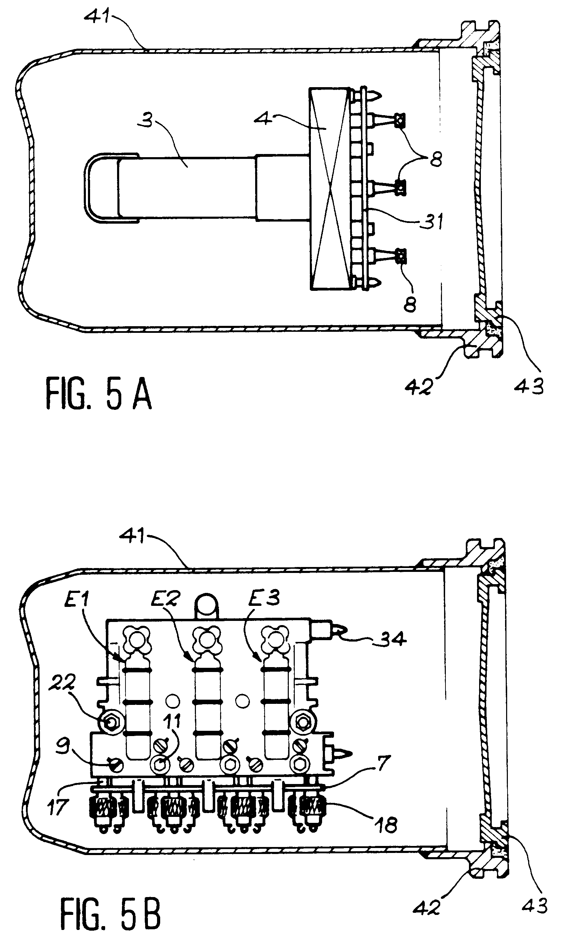

Les figures 5A et 5B permettent de montrer la possibilité d'enfermer les deux parties principales d'un module, chacune dans un conteneur du type "poubelle" ou spécialisé pour le transport. Ainsi, la figure 5A montre le bloc moteur constitué du moteur 3 de la boîte d'engrenage 4 de la plaque supérieure 31 et des turbine 8 installées verticalement selon l'axe de révolution du conteneur correspondant 41.

Ce conteneur 41 possède une bride 42 et un bouchon 43. On note que le conteneur 41 est relativement petit car il répond à ces normes de sécurité à respecter pour le transport ou le stockage de certains produits ou matériels irradiés. La taille et la forme de chacune des deux parties principales du bloc moteur permettent à ce dernier de pouvoir être embarqué dans ce type de conteneur 41.

La figure 5B montre le carter du module enfermé de la même manière dans un conteneur 41 fermé par un bouchon 43 au moyen d'une bride 42.

L'invention revêt certains avantages puisqu'elle permet de former un mélangeur-décanteur possédant de nombreux étages, par exemple neuf, c'est-à-dire trois modules de trois, tout en permettant sa manipulation et son réglage par un télémanipulateur. En effet, un télémanipulateur peut soulever des objets d'un poids relativement limité. La division de la batterie d'étages d'un mélangeur-décanteur en plusieurs modules séparables permet d'effectuer le montage, le démontage et l'entretien, par exemple le remplacement des hublots 12 ou d'une plaque d'étanchéité 28.

Le poids de l'ensemble motorisation comprenant le moteur 3, la boîte à engrenage 4 et la plaque supérieure 31 peut ne peser que cinq kilogrammes. L'ensemble du carter du module pèse moins de dix kilogrammes. Dans ces conditions, un télémanipulateur d'une enceinte blindée étanche est capable de manipuler de tels objets.

On note qu'il est intéressant qu'un tel mélangeur-décanteur résiste à l'attaque de presque tous les agents chimiques et des produits radioactifs à haute activité. Dans ce but, les éléments sont réalisés de préférence à partir d'un acier inoxydable Z2 CND 17/12, sauf les moteurs, joints et engrenages. En effet, ces derniers éléments sont considérés comme "consommables" et peuvent donc être remplacés facilement, de la même manière que les hublots.

En résumé, le mélangeur-décanteur selon l'invention permet donc de répondre aux contraintes de poids et de dimensionnement liées à la télémanipulation et au nombre de mélangeurs-décanteurs désirés.

La présence d'un hublot remplaçable permet de visualiser les interphases sur une phase de travail.

Les réglages peuvent être effectués au télémanipulateur grâce à la localisation de tous les éléments de commande d'un module. Toutes les opérations (horizontalité de la batterie de module, réglage des niveaux d'interphases, commande de circulation des différentes phases légère et lourde) peuvent être effectuées par le télémanipulateur par la partie avant du mélangeur-décanteur.

## Revendications

1. Mélangeur-décanteur du type à étages séparés et à agitation mécanique, comportant pour chaque étage :
- une chambre de mélange (1) à l'intérieur de laquelle tourne :
- une turbine (8) entraînée en rotation par :
- des moyens moteurs (3, 4) ;
- une chambre de décantation (2) en communication avec la chambre de mélange (1) ;
- des canalisations de circulation (39) des phases légères et lourde, reliées avec les canalisations correspondantes des étages voisins ;
- au moins une entrée (E_{L}, Eₗ) et une sortie (S_{L}, Sₗ) des phases respectivement lourde et légère ; caractérisé en ce qu'il possède :
- une clé de réglage du niveau d'interphase (11) ; et
- des clés de commutation (9, 10) des entrées et sorties des phases légère et lourde se trouvant sur l'avant de la surface supérieure (31) de leur module ;
- une structure en modules séparables (M₁, M₂, M₃), chaque module comportant au moins un étage (E₁, E₂ et E₃) deux faces latérales sur chacune desquelles se trouvent deux orifices latéraux (38) de communication des phases lourde et légère, pouvant être reliés avec les orifices latéraux correspondants d'un module adjacent (M₂, M₃), et des moyens de liaison étanche avec au moins un autre module, de manière à ce que chaque module puisse être manipulé par un télémanipulateur, et pouvoir être utilisé et manipulé à distance lorsqu'il est isolé dans une enceinte étanche et inaccessible à un opérateur.

2. Mélangeur-décanteur selon la revendication 1, caractérisé en ce que les entrées (E_{L}, Eₗ) et les sorties (S_{L}, Sₗ) se trouvent sur une même face avant (40) de leur module.

3. Mélangeur-décanteur selon l'une quelconque des revendications précédentes, caractérisé en ce que chaque étage (E₁, E₂, E₃) est doté d'un hublot télédémontable (12) placé sur la face avant (40) en regard de la chambre de décantation correspondante (2), pour permettre la visualisation de l'interphase entre la phase légère et la phase lourde.

4. Mélangeur-décanteur selon l'une quelconque des revendications précédentes, caractérisé en ce que chaque module (M₁, M₂, M₃) possède chacun trois étages (E₁, E₂, E₃).

5. Mélangeur-décanteur selon l'une quelconque des revendications précédentes, caractérisé en ce que des moyens moteurs possèdent pour un module :
- un moteur (3) placé sur la surface supérieure (31) et entraînant :
- une boîte à engrenage (4) ayant une sortie par étage pour entraîner la turbine (8) de chaque chambre de mélange (1), la position en hauteur de la turbine (8) et la vitesse de rotation du moteur (3) étant réglables.

6. Mélangeur-décanteur selon l'une quelconque des revendications précédentes, caractérisé en ce que les moyens de liaison étanche entre les modules (M₁, M₂ et M₃) comprennent :
- une plaque d'étanchéité (28) placée entre deux modules au niveau des orifices latéraux (38);
- un système de serrage à cabestan (19, 20, 21) pour serrer deux modules adjacents (M₁, M₂ ou M₂, M₃).

## Claims

1. Mixer - settler of the type having separate stages and mechanical stirring comprising for each stage a mixing chamber (1) within which rotates a turbine (8) rotated by motor means (3, 4), a settling chamber (2) linked with the mixing chamber (1), circulation pipes (39) for the light and heavy phases and connected to the corresponding pipes of adjacen t stages, at least one inlet (EL, E1) and one outlet SL, S1) for the respectively heavy and light phases, an interphase level regulator member (11) and connecting means (9, 10) of the inlets and outlets of the light and heavy phases located at the front of the upper surface (31) of their module, having a structure with separable modules (M1, M2, M3), each module having at least one stage (E1, E2, E3) and two lateral faces, on each of which are two lateral origices (38) heavy - light phase communication and which can be connected to the corresponding lateral faces of an adjacent module (M2, M3) and means for tight connection to at least one other module, so that each module can be manipulated by a telemanipulator and can be remotely manipulated and used when it is isolated in a tight enclosure and inaccessible to an operator.

2. Mixer - settler according to claim 1, characterized in that the inlets (EL, E1) and outlets (SL, S1) are located on the same front face (40) of their module.

3. Mixer - settler according to one of the preceding claims, characterized in that each stage (E1, E2, E3) has a remotely dismantlable shield window (12) placed on the front face (40) facing the corresponding settling chamber (2), so as to make it possible to see the interphase between the light and heavy phases.

4. Mixer - settler according to one of the preceding claims, characterized in that each module (M1, M2, M3) has three stages (E1, E2, E3).

5. Mixer - settler according to one of the preceding claims, characterized in that the motor means have for one module a motor (3) placed on the upper surface (31) and which drives a gear box (4) having one outlet per stage for driving the turbine (8) of each mixing chamber (1), the height position of the turbine (8) and the rotation speed of the motor (3) being regulatable.

6. Mixer - settler according to one of the preceding claims characterized in that the tight connecting means between the modules (M1, M2 and M3) comprise a sealing plate (28) placed between two modules at the lateral openings (38) and a capstan locking system (19, 20, 21) for locking together two adjacent modules (M1, M2) or (M2, M3).

## Patentansprüche

1. Modularer Mischer-Dekantierapparat mit verschiedenen Stufen und mechanischem Rührer, bei dem jede Stufe besteht aus:
- einer Mischkammer (1), in der eine von einer Antriebsvorrichtung (3,4) angetriebene Turbine (8) rotiert;
- einer Dekantierkammer (2), die mit der Mischkammer (1) verbunden ist;
- Durchflußleitungen (39) für den leichten und schweren Zustand, die mit den entsprechenden Leitungen in den benachbarten Stufen verbunden sind;
- mindestens je einem Eingang (E_{L}, Eₗ) und einem Ausgang (S_{L}, Sₗ) für den schweren und leichten Zustand;
dadurch gekennzeichnet, daß das Gerät ausgerüstet ist mit:
- einem Regler für die Zwischenstufen (11);
und
- Verbindungsstöpseln (9, 10) für die Eingänge und Ausgänge des leichten und schweren Zustands, die sich im vorderen Teil der Oberseite (31) des Moduls befinden;
- einem Konstrukt aus einzelnen Modulen (M₁, M₂, M₃), wobei jedes Modul mindestens eine Stufe (E₁, E₂ und E₃), zwei Seitenteile mit jeweils zwei seitlichen Öffnungen (38) zur Verbindung der Leitungen des schweren und leichten Zustandes, die mit den entsprechenden seitlichen Öffnungen eines benachbarten Moduls (M₂, M₃) verbunden sein können, und abgedichtete Verbindungsvorrichtungen mit mindestens einem anderen Modul umfaßt, so daß jedes Modul mittels eines Teleoperators bedient werden kann und auch dann fernbedient und genutzt werden kann, wenn es für einen Operator nicht erreichbar und in einem Sicherheitsbehälter isoliert ist.

2. Mischer-Dekantierapparat nach Anspruch 1, dadurch gekennzeichnet, daß sich die Eingänge (E_{L}, Eₗ) und die Ausgänge (S_{L}, Sₗ) auf der gleichen Vorderseite (40) des Moduls befinden.

3. Mischer-Dekantierapparat nach einem der vorangehenden Ansprüche, dadurch gekennzeichnet, daß jede Stufe (E₁, E₂, E₃) mit einem fernmontierbaren Sichtfenster (12) versehen ist, das sich auf der Vorderseite (40) gegenüber der entsprechenden Dekantierkammer (2) befindet, und die Beobachtung der Zwischenstufe zwischen dem leichten und dem schweren Zustand ermöglicht.

4. Mischer-Dekantierapparat nach einem der vorangehenden Ansprüche, dadurch gekennzeichnet, daß jedes Modul (M₁, M₂, M₃) aus jeweils drei Stufen (E₁, E₂, E₃) besteht.

5. Mischer-Dekantierapparat nach einem der vorangehenden Ansprüche, dadurch gekennzeichnet, daß die Antriebsvorrichtung für ein Modul besteht aus:
- einem Motor (3) auf der Oberseite (31) zum Antrieb:
- eines Getriebes (4), das auf jeder Stufe einen Ausgang zum Antrieb der Turbine (8) jeder Mischkammer (1) hat, der regelbaren Höhenverstellung der Turbine (8) und der regelbaren Umdrehungsgeschwindigkeit des Motors (3).

6. Mischer-Dekantierapparat nach einem der vorangehenden Ansprüche, dadurch gekennzeichnet, daß die Verbindungen zwischen den Modulen (M₁, M₂, M₃) folgendes umfassen:
- eine Dichtungsplatte (28), die zwischen zwei Modulen in Höhe der seitlichen Öffnungen (38) angebracht ist;
- eine Absperrvorrichtung mittels Griffhahn (19, 20, 21) zur Absperrung zweier benachbarter Module (M₁, M₂, M₃).
